# EUROPEAN PATENT APPLICATION

(11) **EP 2 832 624 A1**
(43) Date of publication of application: **04.02.2015**
(21) Application number: 14743556.4
(22) Date of filing: 27.01.2014
(51) Int. Cl.: B62B 7/08

(54) **FOLDING JOINT FOR BABY CARRIAGE**

(30) Priority: 28.01.2013 CN 201310032148; 28.01.2013 CN 201320046038 U
(71) Applicant: Unitron Enterprises Zhuhai Co. Ltd., Guangdong 519015 (CN)
(72) Inventor: LIU, Xiuping, Zhuhai Guangdong 519015 (CN)
(74) Representative: Jordan, Volker Otto Wilhelm
(86) International application number: PCT/CN2014/071565
(87) International publication number: WO 2014/114270

(57) **Abstract**

The invention relates to a folding joint suitable for a baby carriage, including a lower rotary plate, a upper rotary plate, a rotary plate positioning cover, at least one traction cable and a stopper for preventing the said upper rotary plate or the said lower rotary plate from turning. The said upper rotary plate is connected with the said lower rotary plate by the said at least one traction cable. The said lower rotary plate can turn about one pivot point provided in the said rotary plate positioning cover, and the said upper rotary plate can turn about another pivot point provided in the said rotary plate positioning cover. When the said stopper is released, the said upper rotary plate or the said lower rotary plate is turned, thereby driving the said lower rotary plate or the said upper rotary plate to turn by the said traction cable through which the said upper rotary plate is connected with the said lower rotary plate. The present invention can solve the problem of fingers being jammed or struck occurred during folding the baby carriage, so that the baby carriage can be used safely and securely by infants' parents.

## Description

### TECHNICAL FIELD

The invention generally relates to a folding joint suitable for a baby carriage. More specifically, the present invention relates to a folding joint of a baby carriage without any risk of fingers being jammed or struck.

### BACKGROUND OF ART

At present, linkage mechanism is used in most of the common baby carriage frames in the market, a folding joint of which is only used to connect a front supporting tube with a handle tube. Therefore, when the baby carriage is folded, the displacement between connecting rods leads to fingers being jammed or struck. Also, gear transmission mechanism is used between an upper joint and a lower joint of a folding joint in some baby carriages to fold the baby carriage in a linkage way. However, gears will be exposed when such a folding joint with the gears turns, so that fingers are jammed between the gears and a joint cover.

Since an event of fingers being jammed during folding a baby carriage occurred in the United States, governments and consumers around the worldwide put more emphasis on the safety of the folding joint in the baby carriage. In the past, focus is only put on preventing fingers from being jammed or struck in static state for a baby carriage, and now, with the development of technology, it is not only required to prevent fingers from being jammed or struck statically, but also to prevent the risk of infant's fingers being jammed or struck, which is caused by a folding joint during a baby carriage frame is dynamically folded.

In terms of structure safety of a baby carriage hot concerned now in the market, there is no solution to deal with the problems of fingers being jammed or struck by a folding joint during a baby carriage frame is dynamically folded.

### SUMMARY OF THE INVENTION

The object of the invention is that a folding joint suitable for a baby carriage is provided, which can prevent fingers from being jammed or struck during a baby carriage is folded.

In order to achieve the above object, the present invention provides a folding joint suitable for a baby carriage, including a lower rotary plate, an upper rotary plate, a rotary plate positioning cover, at least one traction cable, and a stopper for preventing the said upper rotary plate or the said lower rotary plate from turning. The said upper rotary plate is connected with the said lower rotary plate by the said at least one traction cable. The said lower rotary plate can turn about one pivot point provided in the said rotary plate positioning cover, and the said upper rotary plate can turn about another pivot point provided in the said rotary plate positioning cover. When the said stopper is released, the said upper rotary plate or the said lower rotary plate is turned, thereby driving the said lower rotary plate or the said upper rotary plate to turn by the said traction cable through which the said upper rotary plate is connected with the said lower rotary plate.

Further, the rotary plate positioning cover includes a rotary plate outer positioning cover and a rotary plate inner positioning cover which are respectively provided with positioning holes, and the said upper rotary plate and the said lower rotary plate are also respectively provided with corresponding positioning holes. The said rotary plate outer and inner positioning cover are connected with the said upper and lower rotary plate through the said positioning holes, thereby forming two pivot points.

Further, both of the said upper rotary plate and the said lower rotary plate are provided with a stopping part at their respective lower ends, and the said stopper is movably installed in stopping areas near the lower ends of the upper and lower rotary plate. When the said stopper is engaged with the stopping part of the said upper rotary plate or the said lower rotary plate, the said upper rotary plate or the said lower rotary plate cannot turn about the pivot points. When the said stopper is released from the stopping part of the said upper rotary plate or the said lower rotary plate, the said upper rotary plate or the said lower rotary plate is turned, thereby driving the said lower rotary plate or the said upper rotary plate to turn by the traction cable.

Further, both of the said upper rotary plate and the said lower rotary plate are provided with a stopping part at their respective lower ends, and the said upper rotary plate is connected with the said lower rotary plate by at least one traction cable, which can be installed in the small retaining nests arranged respectively in peripheral end surfaces of the said upper rotary plate and the said lower rotary plate. One end of the said traction cable is installed in a fixed point and the small retaining nest in the peripheral end surface of the upper end of the said upper rotary plate, and another end of the said traction cable is installed in a fixed point and the small retaining nest in the peripheral end surface of the lower end of the said lower rotary plate. When the said stopper is released from the stopping part of the said upper rotary plate or the said lower rotary plate, the said upper rotary plate is turned about the pivot point in the rotary plate positioning cover in the clockwise direction, thereby driving the said lower rotary plate to turn about the another pivot point in the said rotary plate positioning cover in the counterclockwise direction by the said traction cable.

Further, both of the said upper rotary plate and the said lower rotary plate are provided with a stopping part at their respective lower ends, and the said upper rotary plate is connected with the said lower rotary plate by two traction cables, which can be respectively installed in the small retaining nests arranged respectively in peripheral end surfaces of the said upper rotary plate and the said lower rotary plate. One end of the first traction cable is installed in a fixed point and the small retaining nest in the peripheral end surface of the upper end of the said upper rotary plate, and another end of the said first traction cable is installed in a fixed point and the small retaining nest in the peripheral end surface of the lower end of the said lower rotary plate. One end of the second traction cable is installed in a fixed point and the small retaining nest in the peripheral end surface of the lower end of the said upper rotary plate, and another end of the said second traction cable is installed in a fixed point and the small retaining nest in the peripheral end surface of the upper end of the said lower rotary plate. When the said stopper is released from the stopping part of the said upper rotary plate or the said lower rotary plate, the said upper rotary plate is turned about one pivot point in the rotary plate positioning cover in the clockwise direction, thereby driving the said lower rotary plate to turn about the another pivot point in the said rotary plate positioning cover in the counterclockwise direction by the said first traction cable, and then the said upper rotary plate is turned about one pivot point in the said rotary plate positioning cover in the counterclockwise direction, thereby driving the said lower rotary plate to turn about the another pivot point in the said rotary plate positioning cover in the clockwise direction by the said second traction cable.

Further, both of the said upper rotary plate and the said lower rotary plate have a P-shaped rotation arm. The rotation arm of the lower rotary plate is fixedly connected with the front supporting tube of the baby carriage, the rotation arm of the upper rotary plate is fixedly connected with the handle tube of the baby carriage, and the said rotary plate positioning cover is fixedly connected with the rear supporting tube of the baby carriage.

Further, the rotation arm of the said lower rotary plate is fixedly connected with the handle tube of the baby carriage, the rotation arm of the upper rotary plate is fixedly connected with the rear supporting tube of the baby carriage, and the said rotary plate positioning cover is fixedly connected with the front supporting tube of the said baby carriage.

Further, the rotation arm of the said lower rotary plate is fixedly connected with the rear supporting tube of the baby carriage, the rotation arm of the upper rotary plate is fixedly connected with the front supporting tube of the baby carriage, and the said rotary plate positioning cover is fixedly connected with the handle tube of the said baby carriage.

Based on the above described technical schemes of the present invention, the traction cable(s) for connecting the upper rotary plate with the lower rotary plate is(are) closed in small retaining nests in the rotary plate positioning cover and the rotary plate by making the upper and lower rotary plate turn about two pivot points in the rotary positioning cover. Even if the rotary plate positioning cover is exposed when the upper and lower rotary plate turn dynamically, a gap where fingers is jammed, is not generated between them. By using a baby carriage made from such a folding joint, it is unnecessary for any exposed connecting rods to be arranged between handle tube and front/rear supporting tube. Therefore, the problem of fingers being jammed or struck during folding a baby carriage will be well solved by the folding joint of the baby carriage, so that the baby carriage can be used safely and securely by infants' parents.

### BRIEF DESCRIPTION OF THE DRAWINGS

The schematic embodiments and explanations thereon of the present invention are provided for illustration only and not for the purpose of limiting the invention, and the present invention can be further understood by the attached drawings described in context, which form the present application, in which:
Fig. 1 is a structural view showing schematically a baby carriage frame and an embodiment of a folding joint suitable for the baby carriage according to the present invention;
Fig. 2 is an assembly view showing schematically an embodiment of a folding joint suitable for the baby carriage according to the present invention;
Fig. 3 is an exploded view showing schematically an embodiment of a folding joint suitable for the baby carriage according to the present invention;
Fig. 4 is an assembly view showing schematically an embodiment of a folding joint suitable for the baby carriage according to the present invention;
Fig. 5A and 5B are schematic views showing respectively functional parts of the upper and lower rotary plate of an embodiment of a folding joint suitable for the baby carriage according to the present invention;
Fig. 6A and 6B are schematic views showing respectively traction cables located between the upper and lower rotary plate of an embodiment of a folding joint suitable for the baby carriage according to the present invention;
Fig. 7 is schematic views showing schematically the relation between the stopper and the stopping parts of an embodiment of a folding joint suitable for the baby carriage according to the present invention;
Fig. 8A and 8B are schematic views showing respectively the stopper of an embodiment of a folding joint suitable for the baby carriage according to the present invention, the stopper being released in Fig. 8A, and the lower rotary plate being turned in the counterclockwise direction by the upper rotary plate which is turned in the clockwise direction in Fig. 8B;
Fig. 9 is a schematic view showing a state where fingers is not jammed when the folding joint suitable for the baby carriage according to the present invention has been folded; and
Fig. 10 is an assembly view showing a folding joint for a separate seat of the baby carriage, the present invention being applied in the folding joint.

### Lists of reference numbers:

1: a handle tube of a baby carriage
2: a folding joint of a baby carriage
3: a front supporting tube of a baby carriage
4: a rear supporting tube of a baby carriage
21: a rotary plate inner positioning cover
22: a rotary plate outer positioning cover
23: an upper rotary plate
24: a lower rotary plate
25: a first traction cable
26: a second traction cable
27: a stopper
28: a decorative cover for the rotary plate outer positioning cover
231: a stopping part of the upper rotary plate
241: a stopping part of the lower rotary plate
232: a retaining nest for the traction cable of the upper rotary plate
242: a retaining nest for the traction cable of the lower rotary plate
233: a pivot point formed when positioning holes in the rotary plate positioning cover and the upper rotary plate are pivotally connected together
243: a pivot point formed when positioning holes in the rotary plate positioning cover and the lower rotary plate are pivotally connected together

### DESCRIPTION OF THE PREFERRED EMBODIMENTS

Technical schemes of the invention will be further described in more detail with reference to the specific embodiments and the drawings.

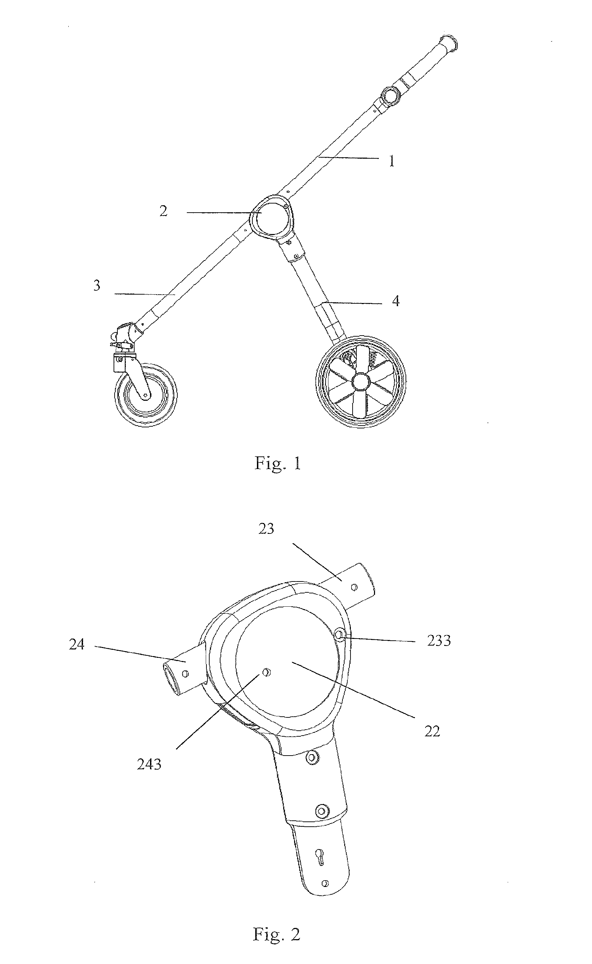

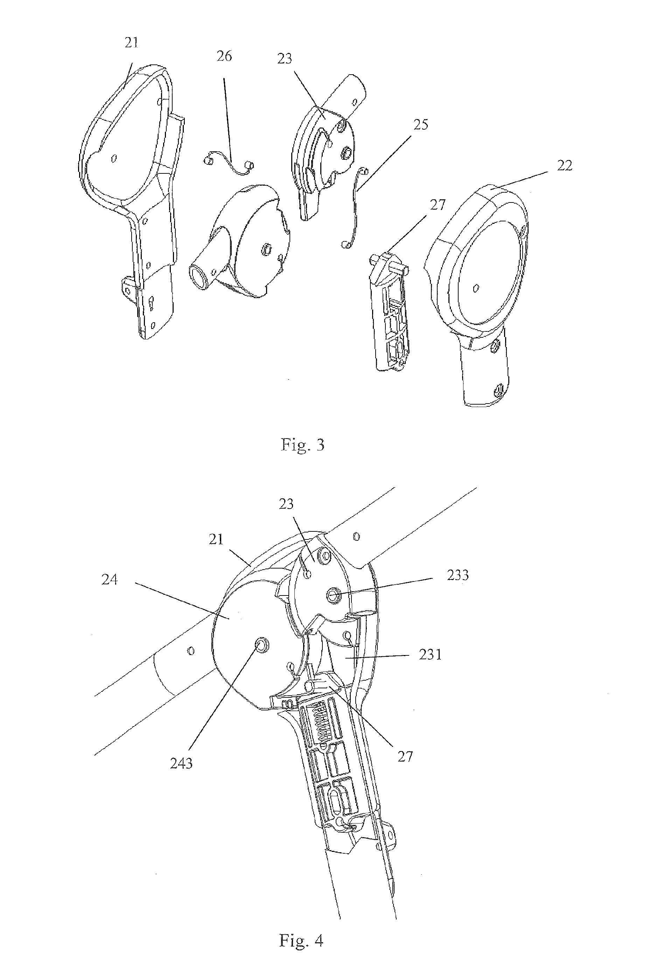

As shown in Fig. 2 and Fig. 3, a schematic assembly view and a schematic exploded view of an embodiment of a folding joint for a baby carriage according to the invention are respectively shown. In the embodiment, the folding joint 2 includes a lower rotary plate 24, an upper rotary plate 23, a rotary plate positioning cover which may include a rotary plate outer positioning cover 22 and a rotary plate inner positioning cover 21, at least one traction cable 25, and a stopper 27 for preventing the upper rotary plate 23 and the lower rotary plate 24 from turning. With respect to a baby carriage frame shown in the Fig. 1, the lower rotary plate 24 may be fixedly connected with a front supporting tube 3, the upper rotary plate 23 may be fixedly connected with a handle tube 1 of the baby carriage, and the rotary plate positioning cover which may include the rotary plate outer positioning cover 22 and the rotary plate inner positioning cover 21 may be fixedly connected with a rear supporting tube 4 of the baby carriage.

As is apparent from Fig. 3, the rotary plate positioning cover of folding joint 2 may include the rotary plate outer positioning cover 22 and the rotary plate inner positioning cover 21 respectively provided with the corresponding positioning holes, and the upper rotary plate 23 and the lower rotary plate 24 are also respectively provided with the corresponding positioning holes. The rotary plate outer and inner positioning cover 22 and 21 and the upper and lower rotary plate 23 and 24 are pivotally connected together by means of these positioning holes, forming a pivot point 233 and a pivot point 243.

With reference to the schematic assembly view shown in Fig. 4, the upper rotary plate 23 is connected with the lower rotary plate 24 by at least one traction cable 25, the lower rotary plate 24 can turn about the pivot point 243 of pivot points provided in the rotary plate inner and outer positioning cover 21 and 22, and the upper rotary plate 23 can turn about the another pivot 233 of the above described pivot points. When the stopper 27 is released, the upper rotary plate 23 is turned, thereby driving the lower rotary plate 24 to turn by the traction cable 25 which is connected to the upper rotary plate 23, or the lower rotary plate 24 is turned, thereby driving the upper rotary plate 23 to turn by the traction cable 25.

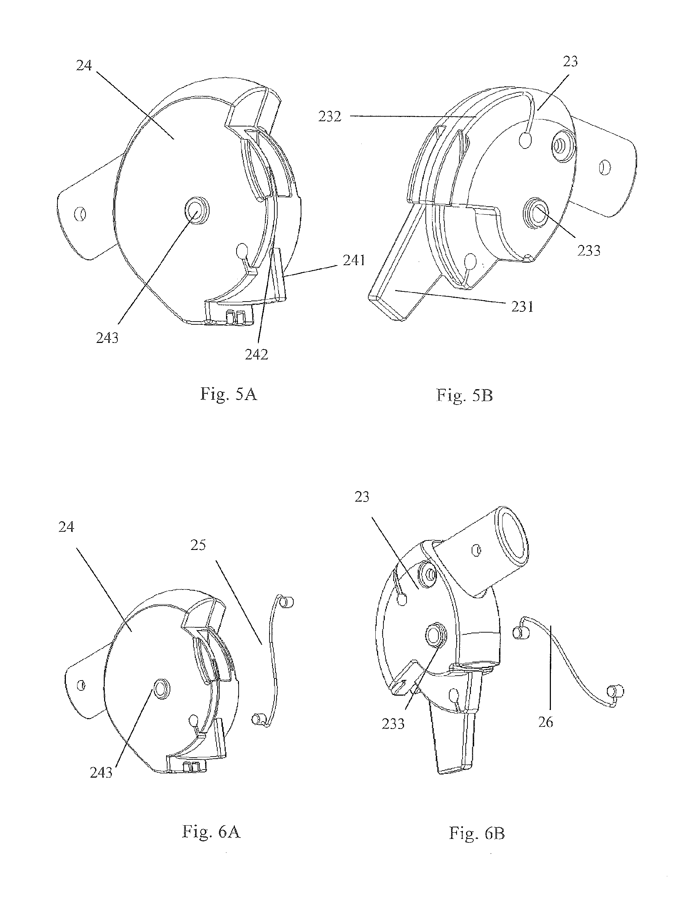

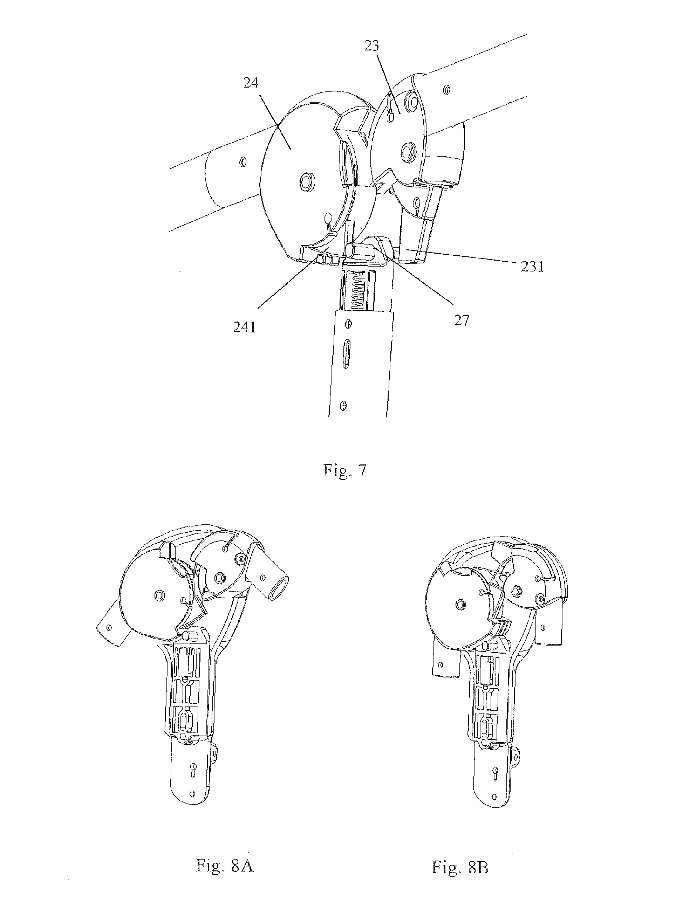

In the embodiment shown in Fig. 5, the upper rotary plate 23 and the lower rotary plate 24 are respectively provided with a stopping part 231 and a stopping part 241 at their respective lower ends. As shown in Fig. 7, the stopper 27 can be movably arranged at stopping areas near the lower ends of the upper rotary plate 23 and the lower rotary plate 24. The upper rotary plate 23 cannot turn about the pivot point 233 when the stopper 27 is engaged with the stopper 231 of the upper rotary plate 23, or the lower rotary plate 24 cannot turn about the pivot point 243 when the stopper 27 is engaged with the stopper 241 of the lower rotary plate 24.

With reference to Fig. 8A and Fig. 8B, when the stopper 27 is released from the stopping part 231 of the upper rotary plate 23, the upper rotary plate 23 is turned, thereby driving the lower rotary plate 24 to turn by the traction cable 25. When the stopper 27 is released from the stopping part 241 of the lower rotary plate 24, the lower rotary plate 24 is turned, thereby driving the upper rotary plate 23 to turn by the traction cable 25.

With reference to Fig. 5A, 5B and 8, the upper rotary plate 23 and the lower rotary plate 24 of the folding joint 2 are respectively provided with small retaining nests 232 and 242 at their respective peripheral end surfaces, for installing the traction cable. The upper rotary plate 23 is connected with the lower rotary plate 24 by one traction cable 25, one end of which is installed in a fixed point and the small retaining nest 232 in peripheral end surface of the upper end of the upper rotary plate 23, another end of which is installed in a fixed point and the small retaining nest 242 in peripheral end surface of the lower end of the lower rotary plate 24. When the stopper 27 is released from the stopping part 231 of the upper rotary plate 23 or the stopping part 241 of the lower rotary plate 24, the upper rotary plate 23 is turned about the pivot point 233 in the rotary plate positioning cover in the clockwise direction, thereby driving the lower rotary plate 24 to turn about the another pivot point 243 in the rotary plate positioning cover in the counterclockwise direction by the traction cable 25.

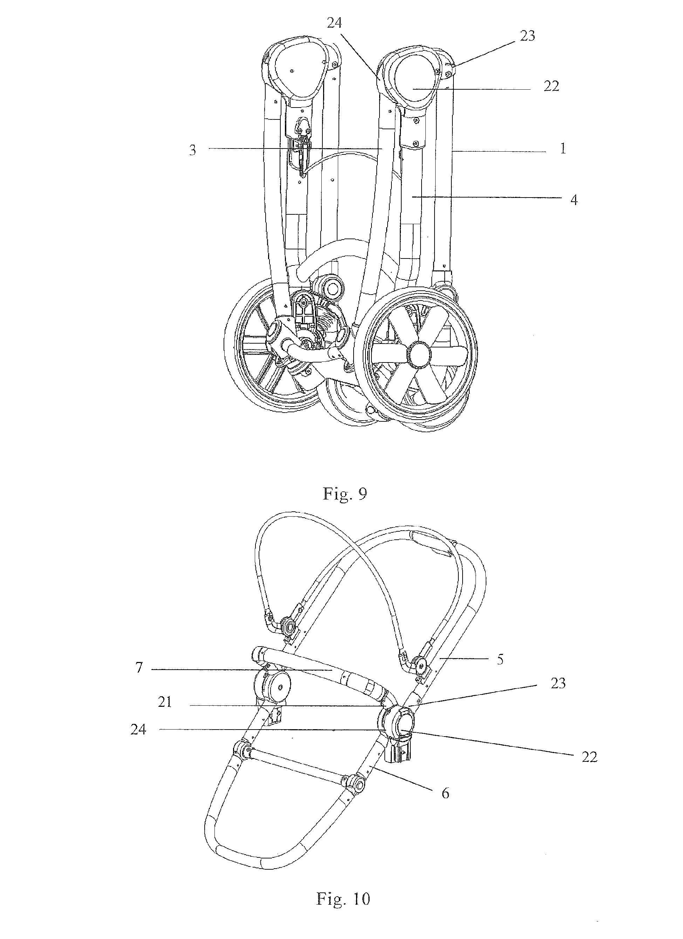

Both the upper rotary plate 23 and the lower rotary plate 24 have P-shaped rotating arm. The rotating arm of the lower rotary plate 24 is fixedly connected with the front supporting tube 3 of the baby carriage, the rotating arm of the upper rotary plate 23 is fixedly connected with the handle tube 1 of the baby carriage, and the rotary plate positioning cover 21 and 22 are fixedly connected with the rear supporting tube 4, thereby there being no gap where fingers is jammed or stuck after the baby carriage frame is folded, shown in details in Fig. 9.

In another embodiment, the connection between the upper rotary plate 23 and the lower rotary plate 24 of the folding joint is realized by two traction cable 25 and 26. One end of the traction cable 25 is installed in a fixed point and the small retaining nest 232 in the peripheral end surface of the upper end of the upper rotary plate 23, and another end of the traction cable 25 is installed in a fixed point and the small retaining nest 242 in the peripheral end surface of the lower end of the lower rotary plate 24. One end of the traction cable 26 is installed in a fixed point and a small retaining nest in the peripheral end surface of the lower end of the upper rotary plate 23, and another end of the traction cable 26 is installed in a fixed point and a small retaining nest in the peripheral end surface of the lower end of the lower rotary plate 24.

When the stopper 27 is released from the stopping part 231 of the upper rotary plate 23 or the stopping part 241 of the lower rotary plate 24, the upper rotary plate 23 is turned about the pivot point 233 in the rotary plate positioning cover in the clockwise direction, driving the lower rotary plate 24 to turn about the another pivot point 243 in the counterclockwise direction by the traction cable 25, and then the upper rotary plate 23 is turned about the pivot point 233 in the rotary plate positioning cover in the counterclockwise direction, driving the lower rotary plate 24 to turn about the another pivot point 243 in the clockwise direction by the traction cable 26.

In another embodiment, the rotating arm of the lower rotary plate 24 may be fixedly connected with the handle tube 1 of the baby carriage, the rotating arm of the upper rotary plate 23 may be fixedly connected with the rear supporting tube 4 of the baby carriage, and the rotary plate inner and outer positioning cover 21 and 22 may be fixedly connected with the front supporting tube 3 of the baby carriage.

In another embodiment, the rotating arm of the lower rotary plate 24 also may be fixedly connected with the rear supporting tube 4 of the baby carriage, the rotating arm of the upper rotary plate 23 may be fixedly connected with the front supporting tube 3 of the baby carriage, and the rotary plate inner and outer positioning cover 21 and 22 may be fixedly connected with the handle tube 1 of the baby carriage.

In another embodiment, the folding joint 2 also may be used as a folding joint for a separate seat of the baby carriage. As seen in Fig. 10, the rotating arm of the lower plate 24 is fixedly connected with a seat tube 6 of the seat, and the rotating arm of the upper plate 23 is fixedly connected with a backrest tube 5 of the seat, with the rotary plate inner and outer positioning cover 21 and 22 being used as connectors to connect the seat with the baby carriage, or being used as armrest connecting bases of the separate seat, which can be connected with armrest tube 7 of the seat.

As is apparent from the above several embodiments of the present invention, no matter how the handle tube, the front supporting tube, or the rear supporting tube of the baby carriage is connected with the upper rotary plate, the lower rotary plate or the rotary plate positioning cover, the present invention is applicable in a folding joint of any baby carriage frame, and no matter how the rear rest tube, seat tube, or the handle tube of the seat is connected with the folding joint, the present invention is applicable in a folding joint of a separate seat in a baby carriage. All these are fall within the scope of the invention.

Finally, it should be noted that the above embodiments is described to explain the technical schemes of the invention without limiting it. Although the present invention has been described in details with reference to the preferred embodiments, those skilled in the art should recognize that change can be made in the particular embodiment of the present invention or equivalent substitution can be made in part of technical features, without depart from the spirit of the technical scheme of the present invention, all of which are fall within the scope of the technical scheme of the present invention.

## Claims

1. A folding joint suitable for a baby carriage, including: an upper rotary plate (23) provided with a positioning hole, a lower rotary plate (24) provided with a positioning hole, a rotary plate outer positioning cover (22) provided with two positioning holes which are respectively corresponding to the positioning hole in the upper rotary plate (23) and the positioning hole in the lower rotary plate (24), a rotary plate inner positioning cover (21) provided with two positioning holes which are respectively corresponding to the positioning hole in the upper rotary plate (23) and the positioning hole in the lower rotary plate (24), a first traction cable (25), a second traction cable (26), and a stopper (27) for preventing the said upper rotary plate (23) or the said lower rotary plate (24) from turning, **characterized in that**:
the said upper rotary plate (23) is connected with the said rotary plate outer positioning cover (22) and the said rotary plate inner positioning cover (21) through the respective positioning holes, thereby forming a pivot point (233),
the said lower rotary plate (24) is connected with the said rotary plate outer positioning cover (22) and the said rotary plate inner positioning cover (21) through the respective positioning holes, thereby forming another pivot point (243),
one end of the said first traction cable (25) is installed on the upper rotary plate (23), and another end of the said first traction cable (25) is installed on the lower rotary plate (24), one end of the second traction cable (26) arranged to be staggered with the first traction cable (25) is installed on the upper rotary plate (23), and another end of the second traction cable (26) is installed on the lower rotary plate (24),
both of the said upper rotary plate (23) and the said lower rotary plate (24) are provided with a stopping part (231, 241) at their respective lower ends which is able to be engaged with or released from the said stopper (27),
the said upper rotary plate (23) can turn about the pivot point (233) provided in the said rotary plate inner positioning cover (21) and the said rotary plate outer positioning cover (22), the said lower rotary plate (24) can turn about another pivot point (243) provided in the said rotary plate inner positioning cover (21) and the said rotary plate outer positioning cover (22),
the said stopper (27) is arranged to be movable with respect to the stopping part (231) of the said upper rotary plate (23) and the stopping part (241) of the said lower rotary plate, when the said stopper (27) is engaged with the stopping part (231) of the said upper rotary plate (23) and the stopping part (241) of the said lower rotary plate (24), the said upper rotary plate (23) and the said lower rotary plate (24) cannot turn about theire respective pivot points, when the said stopper (27) is released from the stopping part (231) of the said upper rotary plate (23) and the stopping part (241) of the said lower rotary plate, in the case of turning the said upper rotary plate (23), the said lower rotary plate (24) can be turned in an direction opposite to the turning direction of the said upper rotary plate (23) by the respective traction cables (25, 26), and in the case of turning the said lower rotary plate (24), the said lower rotary plate (24) can also be turned in an direction opposite to the turning direction of the said lower rotary plate (24) by the respective traction cables (25, 26),
both of the said upper rotary plate (23) and the said lower rotary plate (24) have a P-shaped rotation arm; the P-shaped rotation arm of the lower rotary plate (24) is fixedly connected with the front supporting tube (3) of the baby carriage, the P-shaped rotation arm of the upper rotary plate (23) is fixedly connected with the handle tube (1) of the baby carriage, and the said rotary plate inner positioning cover (21) and the said rotary plate outer positioning cover (22) are fixedly connected with the rear supporting tube (4) of the baby carriage.

2. A folding joint suitable for a baby carriage according to claim 1, **characterized in that**:
the peripheral end surfaces of the said upper rotary plate (23) and the said lower rotary plate (24) are provided with corresponding small retaining nests for arranging the said two traction cables (25, 26), one end of the first traction cable (25) is installed in a fixed point and the small retaining nest in the peripheral end surface of the upper end of the said upper rotary plate (23), and another end of the said first traction cable (25) is installed in a fixed point and the small retaining nest in the peripheral end surface of the lower end of the said lower rotary plate, one end of the second traction cable (26) is installed in a fixed point and the small retaining nest in the peripheral end surface of the lower end of the said upper rotary plate (23), and another end of the said second traction cable (26) is installed in a fixed point and the small retaining nest in the peripheral end surface of the upper end of the said lower rotary plate (24).
